# EUROPEAN PATENT APPLICATION

(11) **EP 2 341 699 A1**
(43) Date of publication of application: **06.07.2011**
(21) Application number: 09306339.4
(22) Date of filing: 29.12.2009
(51) Int. Cl.: H04M 1/725, H04M 3/487, G07F 7/02

(54) **Device and method for capturing data relating to at least one advertisement**

(71) Applicant: Gemalto SA, 92190 Meudon (FR)
(72) Inventor: Gregoire, Louis, 13260 Cassis (FR)

(57) **Abstract**

The invention relates to a device 16 for capturing data relating to at least one advertisement.

According to the invention, the device is adapted to receive data f(ld1) relating to at least one advertisement, and deduce from the data relating to one advertisement at least one identifier Id1.

The invention also relates to a corresponding method.

## Description

### Field of the invention:

The invention relates, in a general manner, to a device for capturing data relating to at least one advertisement.

The device may be in particular a Near Field Communication terminal and/or mobile TeleVision (or TV) terminal.

Moreover, the invention relates to a method for capturing data relating to at least one advertisement.

### State of the art:

A Japanese Patent Laid-Open Publication n°269508/2002 describes a solution in which a Radio Frequency IDentification (or RFID) tag is embedded within a poster for advertising an article or a movie. The RFID tag stores a Uniform Resource Locator (or URL) for addressing a server.

Such a known solution allows providing a user of a mobile NFC terminal that receives from the RFID tag a radiofrequency signal that transports the URL to access an Internet home page of a corresponding server. The terminal user obtains from the server information about the associated advertisement.

However, this known solution does not allow proving that the terminal user has actually experienced an actual exposure to an advertisement.

There is a need to ensure that the terminal user has actually experienced an exposure to an advertisement.

### Summary of the invention:

The invention proposes a solution for satisfying the just hereinabove specified need by providing a device for capturing data relating to at least one advertisement.

According to the invention, the device is adapted to receive data relating to at least one advertisement, and deduce from the data relating to one advertisement at least one identifier.

The principle of the invention consists in that, firstly, a device reads information (or data) relating to an advertisement and, then, extracts or generates, from the read data relating to an advertisement, data that identifies some data relating to the advertisement, as identifier(s).

The data relating to an advertisement, as tag, may be of any type and be static and/or dynamic information. For example, the tag may be of the type of a printed bar code, a 2Dimension (or 2D) bar code, a Bluetooth 2D bar code, a picture, a photo, a RFID tag, an audio and/or video watermark, and/or digital audio and/or video data.

The present invention does not impose any constraint regarding a way the device reads the information relating to an advertisement.

The terminal either retrieves within the read tag the identifier(s) or produces from the read tag the identifier(s).

Thus, the proposed invention allows the device to deduce, i.e. collect or produce, one or several identifiers relating to the advertisement that the device (and therefore a device user) has experienced. The identifier(s) constitute(s) a record that the device has been exposed to some advertisement(s).

The identifier(s) may identify notably, in a unique manner, an advertisement content, one or several particular entities relating to an issuer, a publisher of the advertisement, and/or a particular instance(s) of the considered advertisement content.

The device user may benefit from the concerned advertisement, through at least one of the user senses, such as the eyesight, the hearing, the touch, the smell and/or the taste.

As device, it can be a token, a mobile telephone, a Personal Digital Assistant (or PDA), a netbook, a Personal Computer (or PC), a desktop, a laptop, a server, and/or a set-top box.

Within the present description, a token is a smart object that is intended to communicate with the outside world.

Advantageously, the device comprises means for storing the at least one identifier.

According to a further aspect, the invention is a method for capturing data relating to at least one advertisement.

According to the invention, the method comprises the following steps: a terminal receives data relating to at least one advertisement, and the terminal deduces from the data relating to at least one advertisement at least one identifier.

### Brief description of the drawings:

Additional features and advantages of the invention will be more clearly understandable after reading a detailed description of one preferred embodiment of the invention, given as one indicative and non-limitative example, in conjunction with the following drawings:
- Figure 1 represents a simplified diagram of one exemplary embodiment of a system for capturing data relating to one advertisement, as tag, comprising a mobile NFC telephone, as terminal, a smart card, as token, coupled with the terminal, the system being adapted to read an RFID tag that issues the tag, and deduce from the tag one identifier(s) to be stored locally, according to the invention; and
- Figure 2 illustrates one example of a flow of messages exchanged between notably the RFID tag, the terminal and the token of the system of figure 1.

### Detailed description:

Herein under is considered a case in which the invention method for capturing data relating to one advertisement is implemented by a system including a terminal and a token cooperating with the terminal.

Nevertheless, the present invention method for capturing data relating to one advertisement may be implemented by a device for capturing data relating to one advertisement including a terminal. In such a case, the terminal does not have to cooperate with any token. The terminal is adapted to perform all the functions exerted by the token that are described infra.

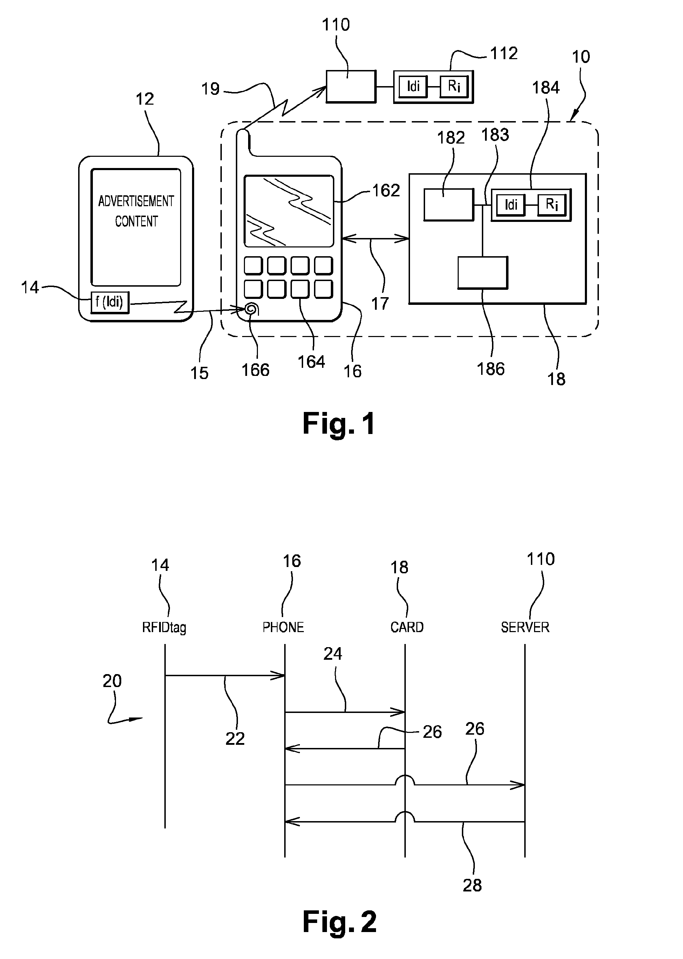

Figure 1 shows in particular one exemplary embodiment of an electronic system 10 for capturing data relating to at least one advertisement.

The data f(Id1) relating to at least one advertisement, also sometimes termed hereinafter tag, originates from an RFID tag 14.

According to another embodiment, instead of the RFID tag 14, a broadcasting server (not represented) broadcasts the tag.

The tag is associated with an advertisement content that is published by a display screen 12 and/or a poster (not represented), as medium supporting the tag. The tag may be fixed to the medium and marks the considered medium.

The advertisement content may relate to an article, a good, a service and/or a movie.

The advertisement content allows promoting a product(s) and/or a service(s) to a public.

The advertisement content is published through audio and/or video data experencied by a phone user.

The medium may be located any where, like a railway station, a bus station, an airport, a street, or any other location at which at least one person or people, as a potential consumer(s) may be exposed to the concerned advertisement.

The display screen 12 may be connected to one or several computers (not represented), like a server for providing an advertisement content.

Only one display screen 12 is represented for clarity reasons. However, it is clear that several display screens (located at different places) may display the same or different advertisement contents at the same time.

The RFID tag 14 comprises an integrated circuit for storing, processing and modulating information, and demodulating a radio-frequency signal.

The RFID tag 14 stores the tag, like an identifier of the considered advertising content, as data f(Id1) relating to an advertisement. The RFID tag 14 may also store other data, as data relating to an advertisement, such as location information corresponding to a geographical point or an area at which the display screen 12 is present, like a taxi/train/subway station, a shopping hall, a building lift, a bus stop, an hotel, an airport hall and so on, and/or a tag identifier.

In a preferred embodiment, the data relating to an advertisement that is stored by the RFID tag 14 is protected in its integrity, so as to be protected against any modification. For example, the data relating to an advertisement is(are) protected by using a check sum or a Message Authentication Code (or MAC) algorithm, or a signature of an originator of the advertisement content.

The RFID tag 14 includes an antenna for receiving and transmitting a radio-frequency signal.

The RFID tag 14 may include or be connected to a battery.

The RFID tag 14 may be active and/or passive. When active, the RFID tag 14 is able to transmit a radio-frequency signal by itself, i.e. in an autonomous manner. When passive, the RFID tag 14 requires an external power source to provoke a radio-frequency signal transmission.

The radio-frequency signal transports at least some data relating to an advertisement stored within the RFID tag 14, like at least the tag itself.

In the described exemplary embodiment, the system 10 for capturing data relating to at least one advertisement includes a mobile NFC telephone 16, as terminal, and a smart card 18, as token, that is coupled with the mobile NFC telephone 16.

As terminal, instead of being constituted by a mobile NFC telephone, the terminal can be, for example, a mobile telephone, a mobile TV telephone, a PC, a laptop computer, a netbook, a set-top box, and/or a PDA.

As token, it can be any electronic device comprising data processing means, at least one memory (or being connected to one memory), and an Input/Output (or I/O) communication interface. The token is any electronic medium that may have different form factors. The token can constitute any electronic medium, as a Secure Removable Module (or SRM). For example, it can be embodied within a smart card, a smart dongle of the USB (acronym for "Universal Serial Bus") type, a Secure Digital card (or SD card), a Multi-Media Card (or MMC) or a chip to be fixed to a terminal, as host device, possibly in a removable manner.

For the sake of clarity and conciseness, the mobile NFC telephone 16 and the SIM type smart card 18 are termed hereinafter the phone 16 and the card 18 respectively.

In a preferred embodiment, the phone 16 comprises a display screen 162, so as to display information to be seen by a user of the phone 16.

In a preferred embodiment, the phone 16 comprises a keyboard 164, so that the phone user enters or selects data or one application to be executed, like one application (or applet when developed in Java) for communicating data relating to an advertisement to the card 18.

The application for communicating data relating to an advertisement to the card 18 may be accessible through a Graphical User Interface (or GUI) relating to the phone 16.

The application for communicating data relating to an advertisement to the card 18 may be accessible through a menu, like a SIM ToolKit (or STK) menu, or an embedded server, known as a Smart Card Web Server, as an application list originating from the card 18. The menu or the server home page is displayed at the phone display screen 162.

The phone 16 comprises a loudspeaker (not represented), so as to emit audio data to be heard by the phone user.

For the described embodiment, the phone 16 is equipped with an NFC chip (not represented), so as to read data notably stored by the RFID tag 14, when the phone 16 is sufficiently close to the RFID tag 14. To be close to the RFID tag 14, the phone user has to approach, preferably further to a voluntary user action, the RFID tag 14 with the phone 16, to receive from the RFID tag 14, through a short radio-frequency signal, the tag, as data relating to an advertisement.

The reception of the tag may involve more or less the end user, through some voluntary user action(s) to be required, such as depressing, either at a same time or in a short time period, such as less than 2 s, one or several buttons of the phone keyboard, like the sole button "OK" for validating that the end user pays attention to the concerned advertisement. The fact that the end user has carried out the voluntary action(s) may be verified so that data relating to the concerned advertisement is effectively stored at the user terminal side.

According to another embodiment, the phone 16 is equipped with a camera (not represented), so as to read data relating to an advertisement, i.e., for example, decode it while translating a graphical form into a binary data format.

According to still another embodiment, the phone 16, such as a mobile TV (acronym for Television) phone, is equipped with a receiver of a radio-frequency signal transporting notably data relating to an advertisement. A mobile TV channel may be dedicated to advertising and being free in access for an end user. The data relating to an advertisement may include an identifier of the advertisement content, an identifier of its instance which varies in relation with the time of its broadcasting. The data relating to an advertisement may be inserted as specific packet data stream associated with the advertising channel. The data relating to an advertisement is sent from the broadcasting server through any broadcasting network and/or any radio-communication network, like the one related to Global System for Mobile Communications (or GSM), a third generation (or 3G); a fourth generation (or 4G), and/or a Long Term Evolution (or LTE) network(s). As broadcasting network(s), it can be, for example, the one related to a standard termed OMA BCAST (acronym for "Open Mobile Alliance - BroadCAST"), a Digital Video Broadcasting-Handheld (or DVB-H); a Digital Video Broadcasting-Satellite Handheld (or DVB-SH); a Digital Video Broadcasting-Satellite (or DVB-S); a Digital Video Broadcasting-Territorial (or DVB-T); a Digital Audio Broadcasting (or DAB); a Digital Multimedia Broadcasting (or DMB); a Terrestrial-Digital Multimedia Broadcasting (or T-DMB); a Digital Radio Mondiale (or DRM); a Multimedia Broadcast Multicast Services (or MBMS); a Broadcast Multicast Services (or BCMCS); a Forward Link-Only (or FLO) network; a WiMAX; an Integrated Mobile Broadcast (or IMB); an Integrated Services Digital Broadcasting-Terrestrial (or ISDB-T); and/or an Advanced Television Systems Committee Mobile Digital TV (or ATSC Mobile DTV) network(s).

The phone 16, as end user terminal, may be equipped with a lot of different kinds of tag reader, as means for reading data relating to an advertisement.

The used tag reader(s) that is(are) included within the phone 16 may be of any type and may be numerous, like a NFC reader, a camera, a watermark decoder, and/or a TV application for analysing the packet data stream.

For example, when the phone is a mobile TV phone and the tag is comprised within a broadcast data stream, (the terminal does not need to be equipped with another reader) since the reader of the tag that originates from the broadcasting server, is the one that allows to decode the received broadcast data stream and is therefore also able to read the transported tag.

According to the described embodiment, the NFC chip may be carried by the card 18, soldered or attached to the phone 16.

The NFC chip is connected to an antenna 166 for receiving, through a wireless link 15, a short range radiofrequency signal originating from the RFID tag 14.

The antenna 166 may be included within the phone 16 (for example incorporated within its motherboard), or added, as a separate and distinct element, within a phone case (for example by being lodged between a phone battery and a phone cover).

The phone 16 includes at least one microprocessor, at least one memory and at least one I/O interface (not represented).

The phone memory stores data and at least the application for communicating data relating to an advertisement to the card 18.

The phone memory stores notably the data relating to an advertisement originating from the RFID tag 14 and possibly additional data being related to the advertisement. The additional data may be generated by the phone 16 itself while the data relating to an advertisement is being read by the NFC chip.

Preferably, the phone I/O interfaces also include a radio-frequency interface with a telecommunication network(s), such as a mobile radio-telecommunication network and/or an Internet type network.

Preferably, the phone I/O interfaces also include a physically contact interface or a contact-less interface with the card 18, so as to exchange, through a bi-directional link 17, data relating to one advertisement.

The phone 16 and the card 18 exchange data by using Application Protocol Data Unit (or APDU), a HyperText Transfer Protocol (or HTTP), a Universal Serial Bus (or USB), and/or any other protocol(s).

The phone microprocessor processes data originating from the phone memory and data originating from outside the phone 16.

The phone microprocessor executes notably the application for communicating to the card 18 data relating to an advertisement.

The phone 16 or the phone user, through its GUI, is preferentially able to trigger the execution of the application for communicating to the card 18 data relating to an advertisement as soon as the NFC chip, as RFID reader, has fetched the tag originating from the RFID tag 14.

Once fetched by the NFC chip, the NFC chip provides the phone microprocessor with the fetched tag.

The phone microprocessor decodes the fetched tag.

The execution of the application for communicating to the card 18 data relating to an advertisement may generate additional data relating to a context of the reception of the tag. The thus generated additional data related to the context of the tag reception is stored within the phone memory. The generated additional data may be information for locating a medium supporting the tag, information for identifying a medium supporting the tag, for example, the display screen 12, and/or information relating to the time of the tag reception.

The execution of the application for communicating to the card 18 data relating to an advertisement extracts or generates one or several identifiers from the tag originating from the RFID tag 14.

For example, a first advertisement that is experienced by the end user that owns and carries the card 18 allows the phone 16 to send to the card 18 a first identifier denoted ID1.

Preferably, when the tag is read by the NFC chip, as RFID reader, the phone 16 obtains directly one or several identifiers from the decoding of the tag, i.e. without any further data processing, as extracted identifier(s).

Alternately, when the tag is read by the NFC chip, as RFID reader, the phone 16 generates one or several identifiers from the decoded data relating to an advertisement with a further data processing at the phone side. The data processing may be a conversion of decoded data by using a conversion table with decoded data, as entered data, and an identifier(s), as corresponding generated data. The conversion table takes into account a particular rule or policy that is predefined. The conversion table may be downloaded from a remote server into either the phone 16 or the card 18, as entity for converting an identifier into corresponding data representing (user) rights. The data representing rights entitles a user of the phone 16 and/or the card 18 to access an electronic service.

For example, the identifier(s) may be related to one or several involved entities relating to an issuer and/or a publisher of the advertisement, a sponsor, a publisher, like a TV broadcaster, a radio broadcaster, a magazine publisher, a street board operator, a transport company and/or a mobile radio-telecommunication operator, a web service operator.

For example, the identifier(s) may be related to one particular advertisement presentation instance(s), for the TV, the broadcast network, a channel and date and time, for a radio, a radio station and date and time, for a paper magazine, an issue and a page, for a street board, a board location, for a public transport means, a bus, train, subway, plane, or taxi identifier and/or an advertising location on the public transport means, for a telecommunication service, an advertising type and date and time, for a web service, a web page, an advertising type, and/or a date and time.

Preferably, the phone microprocessor sends the deduced identifier(s), through the bi-directional link 17, to the card 18.

According to an alternative embodiment, instead of sending the deduced identifier(s) to the card 18, the phone microprocessor sends, through a mobile radio-communication network (not represented) and/or an Internet type network (not represented), to a remote server (not represented) the deduced identifier(s).

The phone microprocessor may also send a question, as a user challenge, that is extracted from the decoded tag, to the card 18. The question may be related to the advertisement content itself. The phone microprocessor may also send to the card 18 a corresponding response that is also extracted from the decoded tag. The corresponding response can be verified by the phone 16 and/or the card 18, as device or system 10 for capturing data relating to advertisement. The user challenge allows capturing end user attention while prompting her or him through the display screen 162 a response to an asked question. The attention of the end user may be about the advertisement content, so as to show that the end user is aware and active while she or he receives a corresponding advertising message, as record of user attention. As a matter of fact, the end user needs to memorize at least a part of the advertisement message, so as to give a right response to the asked question, as restitution of some relevant information relating to the concerned advertisement, notably its content and/or its instance.

The card 18 plays a role of a personal recorder of data relating to advertisement, namely the deduced identifier(s), while being preferably a safe for the corresponding record(s) stored within the card 18 (i.e. having rights to access to it(them)).

The card 18 includes at least one card microprocessor 182, at least one card memory 184 and at least one card I/O interface 186, as internal components. The internal components are all connected together through an internal control data bus 183.

As card 18, it may be a Universal Integrated Circuit Card (or UICC) that cooperates with the mobile NFC tephone, as terminal. As known per se, the UICC includes a Subscriber Identity Module (or SIM) application or a corresponding application. The UICC can be a smart card that securely stores an International Mobile Subscriber Identity (or IMSI), as a unique number associated with all Global System for Mobile Communications (or GSM) and 3Generation (or 3G), 4Generation (or 4G) network mobile phone users. The IMSI is used to identify a subscriber in relation to at least one mobile radio-communication network. The SIM type smart card can be, for example, a SIM smart card for a GSM network, a Universal Subscriber Identity Module (or USIM) for a Universal Mobile Telecommunication System (or UMTS) network, a Removable User Identity Module (or RUIM), a Code Division Multiple Access (or CDMA) Subscriber Identity module (or CSIM) for a CDMA network, and/or an Internet Protocol multimedia Services Identity Module (or ISIM) for IP Multimedia Subsystem (or IMS).

Naturally, the just aforementioned list is not exhaustive but only for exemplifying purposes and is not considered to reduce the scope of the present invention.

The card microprocessor 182 processes data originating from the card memory 184 and data originating, through the card I/O interface 186, from outside the card 18.

The card memory 184 stores data, among which data relating to an advertisement, and at least one application for processing and communicating data relating to an advertisement to a remote server 110 (that is further described infra).

The card microprocessor 182 executes notably the application for processing and communicating data relating to an advertisement to the server 110.

The card 18 is preferentially able to trigger the execution of this application as soon as the card 18 receives the deduced identifier(s).

The card memory 184 may have been previously loaded with data relating to a response to a question, as user challenge in relation with the advertisement content and to be verified, in order to validate that the end user experiences the concerned advertisement.

Each time the card user experiences one advertisement, the card 18 executes the application for processing and communicating data relating to an advertisement to the server 110.

Preferably, the card 18 is arranged so as to store the deduced (advertisement) identifier(s) received through the phone 16. The deduced identifier(s) constitute a track(s) registered by the card 18, as data record that the card user, as end user, has experienced a corresponding advertisement.

In another embodiment (not represented), the card does not cooperate with any terminal and is adapted so as to receive directly from the RFID tag 14 data relating to one advertisement from outside the card, extract or generate one identifier(s) from the received data.

In a preferred embodiment, the card 18 is further adapted to convert the deduced identifier(s) into a predetermined counter value(s), value(s) of a counter that counts down, and/or one predetermined key(s), as data representing (user) rights.

The card memory 184 also stores the resulting data representing (user) rights corresponding to the deduced identifier(s) received from the phone 16.

According to the given example, the card memory stores the first advertisement identifier ID1 and corresponding first data representing rights denoted R1.

The data representing (user) rights may be managed through a loyalty counter, a purse counter that is incremented or decremented when applicable.

The (user) rights obtained further to one or several experiences of an advertisement entitle the card user to buy goods or pay one or several services by cumulating a predetermined level of rights for each experience by the card user.

The card 18 may be further able to provide the end user, for example, through the phone display screen 162, with the resulting data representing rights associated with the advertisement that the end user has (possibly just) experienced. The end user is thus aware of the corresponding rights that she or he has just obtained.

The data representing (user) rights, like a predetermined amount value of a counter (that counts down or up) or a predefined key, is to be used by the card 18 or the phone 16, on behalf of the end user, so as to access and/or use one or several services.

The card 18 may be adapted so as to send to the phone 16 a command for requesting the phone user, for example through the phone display screen 162, about her or his choice among the available service(s) which she or he desires to benefit from.

The concerned service(s) may be:
- a service for accessing an amusement park, a cinema, a concert, as service for accessing a controlled access area;
- a service for accessing a mobile telephony network and/or an Internet type network;
- a service for accessing a song, a music and/or a film, as service for accessing content data;
- a Pay-Per-View (or PPV) Television service, a Pay-Per-Time (or PPT) Television service, as subscription-based television service; and/or
- a service for transporting a person through a public transport means, like a bus, taxi, subway, train, and /or plane.

For example, the service for accessing content data may be accessible by a decryption key for decrypting data that is provided in an encrypted manner from a server (not represented). The decryption key that is stored and possibly previously generated by the card 18 is freed by the card 18 so as to be used possibly once a predetermined threshold value of a counter has been reached, i.e. after one or several executions of the application by the card 18.

For example, the service for transporting a person through a plane(s) may be accessible by cumulating predetermined miles each time the card user experiences a corresponding advertisement, as loyalty counter.

According to another embodiment (not represented), instead of the card 18, an external server is adapted to convert the deduced identifier(s) into corresponding data representing (user) rights. For example, according to such an embodiment, the phone 16 or the card 18 sends to the server a request for converting the deduced identifier(s) into corresponding data representing (user) rights. When applicable, the server sends back to the phone 16 or the card 18, as requestor, the generated data representing (user) rights, as corresponding response.

The card 18 may be able to verify that:
- the deduced identifier(s) are the right expected one(s), i.e. the deduced identifier(s) has(have) not been modified after its(their) issuing;
- the deduced identifier(s) originate(s) from a right issuer. The right issuer may have shared at least one credential, such as a key, data, and/or an algorithm, with the card 18 that stores it;
- the end user has really experienced the advertisement by checking that a user response coincides with a response corresponding with a question asked and received through the phone 16 either through the received tag.

Thanks to successful verification(s), the card 18 allows to certify, at the terminal side, that the deduced identifier(s), as data relating to the concerned advertisement, is(are) authentic, i.e. not issued from a hacker. The identifier(s) become(s) thus certified identifier(s).

The storing of the deduced identifier(s) within the card memory 184 may be conditioned by successful verification(s), so as to ensure that the stored data relating to advertisement is due to a true exposure to the concerned advertisement.

The card 18 is connected, through a wire or wireless link 19, to a mobile radio-communication network and/or an Internet type network (not represented) to the server 110.

The card 18 is arranged to transmit to the server 110, at least the (advertisement) identifier(s) when this(these) latter has(have) been preferably previously certified, as data relating to the advertisement that has been consumed by the end user.

The system 10 allows therefore reading and deducing (or infer) one or several identifiers, as records of exposure to an advertisement for one user, while possibly verifying a particular attention of the user during the exposure itself and/or a particular user action(s) needed for reading the advertisement.

The system 10 allows providing a user of the phone 16 and the card 18 with at least a first (advertisement) identifier ID1, like a reference relating to an originator of the concerned advertisement, possibly accompanied with some other information, like data R1 representing (user) rights for accessing at least one offered service.

The system 10 may provide the terminal user, for example, through the display screen 162, with information, like data representing (user) rights that is generated by the card 18 and corresponds to the concerned experienced advertisement(s).

The system 10 constitutes a simple and cheap architecture that is simple and cheap to implement, so as to prove that the end user has experienced an advertisement that is associated with a tag that marks the medium of the advertisement.

Only one system 10 for capturing data relating to advertisement, i.e. one phone 16 and one coupled card 18, has been used for clarity reasons. However, it is clear that the server 110 collects the data relating to advertisement uploaded from a fleet of user terminals, as system(s) and/or device(s) for capturing data relating to advertisement.

The server 110 constitutes a central entity for collecting at least the identifier(s), possibly with other additional data relating to advertisements, as all the records of exposures to advertisements that originate from any device and/or system 10 for capturing data relating to advertisement, like the phone 16 and/or the card 18.

Preferably, the server 110 collects the data relating to advertisement, when it has been previously certified at the terminal side, i.e. by the card 18 for the described embodiment, only when the end user has been exposed to the advertisement content. The collection of data relating to advertisement is thus secure. A same advertisement identifier may be consumed by two or more end users.

The server 110 includes at least one microprocessor, as data processing means (not represented), includes or is connected to at least one memory 112, and includes at least one I/O interface, as means for communicating with outside (not represented).

The server microprocessor executes the application for collecting data relating to an advertisement.

The server I/O Interface is connected with at least one mobile radio-communication network and/or one Internet type network, so as to receive from the phone 16 and/or the card 18 at least one (advertisement) identifier and possibly other additional data relating to advertisement.

The server memory 112 stores notably one application for collecting data relating to an advertisement that originates from any device or system 10 for capturing data relating to one advertisement, the content of which is consumed by a phone user.

The server memory 112 (or a memory accessible from the server 110) stores within a database each received piece of information relating to an advertisement tracked by each individual device or a system 10 for capturing data relating to an advertisement, like the phone 16 and/or the card 18.

The database may record any data relating to an advertisement that is uploaded from the phone 16 and/or the card 18, such as an advertisement content identifier, corresponding data representing (user) rights, location information, i.e. the place where the end user experienced the concerned advertisement, and/or other data.

The database may allow generating some statistics, such as the (advertisement) identifier(s) that is(are) the most experienced, the corresponding context, geographical location(s) of advertisement that are the most consumed by end users...

The database may allow estimating a success of an advertising campaign and/or request some money (or equivalent) from at least one corresponding advertisement originator, so as to pay at least one service. The service(s) is(are) only accessible through record(s) that some advertisement(s) has(have) been experienced by one or several end users.

The database allows to record at least the (advertisement) identifiers, as reliable data relating to advertisements when the identifiers have been preferably certified at each terminal side, as accounting for records for a later settlement(s) between different operators relating to, on the hand, advertisement activity and, on the other hand, corresponding services accessible thanks to the consumption of the concerned advertisements by end users.

The server 110 is dedicated to running the application for collecting data relating to an advertisement that originates from outside the server 110 any device or system 10 for capturing data relating to one advertisement, like the phone 16 and/or the card 18.

The server 110 records all the identifiers relating to corresponding advertisements that have been experienced by some end users (those who have experienced the concerned advertisements). To record data relating to the consumed advertisements, the server 110 stores at least the corresponding identifiers and further possible corresponding additional data that is uploaded from the end user device or system 10 for capturing data relating to an advertisement. As further corresponding additional data, it may be data relating to a context of the reception of data relating to each concerned advertisement, and/or an identifier of the phone 16 and/or the card 18, as device or system 10 for capturing data relating to an advertisement.

The thus uploaded data from the card 18 and/or the phone 16 to the server 110 may have been previously encrypted, so as to protect access to the content. To encrypt the data, the server 110 and the phone 16 and/or the card 18 share, i.e. store and use, an encryption algorithm and an encryption key and/or a decryption algorithm and a decryption key.

Figure 2 depicts an example of a message flow 20 that involves the RFID tag 14, the phone 16, the card 18 and the server 110, so as to track a record each time an end user experiences one advertisement.

Firstly, it is assumed that the display screen 12 displays an advertisement content, such as a street poster or a film relating to a car, while an associated tag, like an identifier relating to a manufacturer of the car, as ID1, is stored within the RFID tag 14.

A phone user that has seen the advertisement at the display screen 12 approaches the phone 16 to the RFID tag 14, so as to possibly power it and fetch the tag stored within the RFID tag 14.

The RFID tag 14 transmits, through a short range radio-frequency signal, to the phone 16 the tag with a first message 22.

According to another embodiment (not represented), a broadcasting server broadcasts a tag that is received by a mobile TV phone, when the end user follows a broadcast channel containing the tag.

The reception, through the NFC chip, by the phone 16 of the first message 22 triggers an execution of an application for capturing data relating to the concerned advertisement.

The phone 16 launches the application for communicating to the card 18 data relating to an advertisement.

The phone 16 extracts from the decoded received tag at least an identifier, for example, one identifier relating to a manufacturer of the car, as ID1.

According to an alternative embodiment, the phone 16 generates from the received tag an identifier relating to a manufacturer of the car, as ID1. For example, the phone 16 translates the received tag into an identifier that has been previously registered by using a conversion table that is stored within the phone memory. The conversion table comprises at least one tag and an identifier associated with each tag, as generated identifier.

The phone 16 may also extract from the decoded received tag a question, as challenge, and possibly a corresponding expected response. The question is displayed by the display screen 162, for example "what is the colour of the advertised car ?". Such a displaying prompts the phone user to answer the asked question. If the phone user gives the right response (after a comparison performed by the phone microprocessor (or the card microprocessor) with the expected response that is registered within the phone memory (or the card memory)), for example "green", then the phone 16 (or the card 18) is allowed to carry out a sending of the data relating to the considered advertisement to the card 18 or an external server (not represented) (described hereinafter with a second message 24). Otherwise, i.e. when the given response does not match the expected registered response, the phone 16 (or the card 18) is forbidden to carry out any further action relating to a capture of a record relating to the concerned advertisement, in particular no conversion of the identifier into corresponding data representing (user) rights is carried out.

The phone 16 may further generate additional data relating to a context of the tag transmitted by the first message 22, such as the date and time of the reception of the tag.

The phone 16 sends to the card 18 a second message 24 with at least the identifier relating to the manufacturer of the car, ID1, possibly accompanied with the other generated additional data relating to the concerned advertisement, as data relating to the concerned advertisement.

As soon as the card 18 receives the data relating to advertisement originating from the phone 16, the card 18 launches the application for processing and communicating data relating to an advertisement to the server 110.

The card 18 preferably verifies whether the received (deduced) identifier ID1, has not already been stored within the card memory, and if the identifier is received for a first time, then the card 18 stores the just received identifier. Otherwise, namely if the identifier has already been received, then the card 18 has already recorded it and does not store it once again, in order to avoid that the end user benefits, in an undue manner, twice from the same consumed advertisement.

Prior to the storing of the received (deduced) identifier ID1, the card 18 preferably verifies whether the received identifier ID1, and/or an originator of the identifier is(are) valid, i.e. has(have) not been modified with respect to a result of an algorithm that is known to the card 18.

The card 18 preferably generates from the (deduced) identifier ID1, corresponding data R1 representing (user) rights relating to a consumption of the concerned advertisement. To generate the data representing (user) rights, the card 18 may use a conversion table that associates with each of a list of identifiers corresponding data representing (user) rights. For example, the identifier of the manufacturer of the car matches a key for accessing, in a free manner, a mobile TV channel either for a predetermined period of time, like one month, or for a particular predefined amount.

According to an alternative, instead of the card 18, an external server addressed by the phone 16 generates from the deduced identifier ID1, corresponding data R1 representing (user) rights relating to a consumption of the concerned advertisement, and sends the generated data R1 representing (user) rights, as response, to the phone 16.

Once data R1 representing (user) rights has been generated by the card 18, the card 18 may verify, when the consumption of the concerned advertisement allows to increment or decrement a counter, whether a predetermined counter threshold value has been reached or not.

The card 18, further to possible successful verification(s) and the storing of the identifier ID1 of the manufacturer of the card, sends, preferentially via the phone 16, to the server 110 a request 26 for recording data relating to an advertisement, encompassing notably, as parameters, the identifier ID1, as data relating to an advertisement, and/or the corresponding data R1 representing (user) rights.

The phone 16 may, prior to the sending of the request 26, insert within the request 26, as third message, further data relating to the advertisement, as additional parameter(s).

Once the server 110 has received the identifier ID1 and/or the corresponding data R1 representing (user) rights, the server 110 executes the application for collecting data relating to an advertisement by writing into the server memory 112 (and more exactly a dedicated database) the identifier ID1 and/or the corresponding data R1 representing (user) rights, as data relating to an advertisement.

As soon as the server 110 has registered within the database the identifier ID1 and/or the corresponding data R1 representing (user) rights, as data relating to an advertisement, the server 110 may send back, preferably via the phone 16, to the card 18 a fourth message 28 for acknowledging a record of the data relating to the advertisement, as response to the request for recording data relating to an advertisement.

The phone 16 may let display at the display screen 162 a text message informing the phone user that a record of the data relating to an advertisement, namely the identifier ID1 and/or the corresponding data R1 representing (user) rights, has been remotely (i.e. at the server 110 side) taken into account.

The locally (i.e. at the user terminal 10 side) and/or remotely (i.e. at the server 110 side) recording of the experienced advertisement, namely the identifier ID1 and/or the corresponding data R1 representing (user) rights, may be very quick, namely just after the end user has experienced an advertisement, for example, just after tapping on the RFID tag 14 to get information.

The proposed solution allows thus a end user to acquire a "proof(s)" that she or he has been exposed to advertising, i.e. she or he has received the advertising message, while the end user has been passive (i.e. not involved for the capture) or active (i.e. involved for the capture while requiring end user attention).

The proposed solution is therefore user friendly since, on the one hand, the end user is not, in a mandatory manner, involved possibly apart from a voluntary action to capture the tag, as data relating to an advertisement, and, on the other hand, convert the read tag into corresponding data representing (user) rights entitling her or him to pay goods and/or service(s), such as to access or consume some content data.

The proposed solution may be secure in particular when the card 18, as authenticity or certification entity, has carried out successful verifications to prove that no wrong record, like an undue multiple record (i.e. only a unique record is permitted), and/or no wrong actor, like a hacker, has(have) been involved to generate the record(s). Thus, only one eligible end user that has actually experienced an advertisement may benefit from corresponding data representing (user) rights.

## Claims

1. A device (16) for capturing data relating to at least one advertisement, **characterized in that** the device is adapted to:
- receive data (f(Id1)) relating to at least one advertisement, and
- deduce from the data relating to one advertisement at least one identifier (Id1).

2. Device according to claim 1, wherein the device comprises means (18) for storing the at least one identifier.

3. Device according to claim 1 or 2, wherein the device comprises means for converting the at least one identifier into data (R1) representing rights.

4. Device according to any of claims 1 to 3, wherein the device comprises:
- means for verifying whether the at least one identifier has or has not been stored within the device;
- means for verifying whether the at least one identifier is valid or not;
- means for verifying an originator of the at least one identifier is valid or not;
- means for verifying whether a device user gives a right expected response to at least one device user challenge, the data relating to at least one advertisement including the at least one device user challenge; and/or
- means for verifying whether data representing rights has reached or not a predetermined threshold value.

5. A method (20) for capturing data relating to at least one advertisement, **characterized in that** the method comprises the following steps:
- a terminal (16) receives (22) data relating to at least one advertisement, and
- the terminal deduces from the data relating to at least one advertisement at least one identifier.

6. Method according to claim 5, wherein, a token being coupled with the terminal, the terminal sends to the token the at least one identifier, the token stores the at least one identifier.

7. Method according to claim 6, wherein the token converts the at least one identifier into data representing rights.

8. Method according to claim 6, wherein the terminal or the token sends a request to an external server, the server converts the at least one identifier into data representing rights, the server sends to the terminal or the token data representing rights.

9. Method according to any claim 5 to 9, wherein the terminal adds data relating to a context of the received data relating to at least one advertisement.

10. Method according to claim 7 or 8, wherein the rights allow to access at least one service including at least one element of a group comprising:
- a service for accessing content data;
- a service for accessing a controlled access area;
- a service for accessing at least one network;
- a subscription-based television service;
- a Pay-Per-View Television service;
- a Pay-Per-Time Television service;
- a service of mobile telephony; and
- a service for transporting a person.
